# EUROPEAN PATENT APPLICATION

(11) **EP 1 595 736 A1**
(43) Date of publication of application: **16.11.2005**
(21) Application number: 05104014.5
(22) Date of filing: 13.05.2005
(51) Int. Cl.: B60N 2/28, B60N 2/44, E05B 63/12, E05C 5/00

(54) **Constraint device for the releasable fastening of a child safety seat to a motor vehicle seat**

(30) Priority: 14.05.2004 IT TO20040323
(71) Applicant: SABELT S.p.A., 10129 Torino (IT)
(72) Inventor: Borghi, Antonello, 10092 Beinasco (IT)
(74) Representative: Jorio, Paolo

(57) **Abstract**

A constraint device (1) for the releasable fastening of a child safety seat (2) to a motor vehicle seat (3) is described, equipped with fastening means (5) for coupling with matching means (14) carried by the seat (3); control means (6) operatively connected to the fastening means (5) and mobile for defining coupling and decoupling between the fastening means (5) and the matching means (14); and guiding means (7) for defining a predetermined movement path for the control means (6). Such path includes a first section (P1), along which the operation of the fastening means (5) is prevented, and a second section (P2), along which the operation of the fastening means (5) by the control means (6) is allowed.

## Description

The present invention relates to a constraint device for the releasable fastening of a child safety seat to a motor vehicle seat.

As it is known, for safety reasons, transporting children aboard motor vehicles implies using appropriate child safety seats fastened to the seats. Such child safety seats operate to withhold the child in the event of a collision or sudden braking of the motor vehicle in order to prevent the child from being thrown inside the passenger compartment and enduring injuries or contusions.

In use, the child safety seat is fastened to the respective seat by means of appropriate releasable constraint devices.

In particular, the child safety seat can be positioned on the seat in two different operational arrangements. In a first case, the child safety seat backrest is abutly arranged against the seat backrest. Alternatively, the child safety seat can be fastened in the opposite direction with respect to the motor vehicle seat making the seat front side of the child safety seat cooperate with the seat backrest.

Generally, the seat of the child safety seat is equipped on its bottom side with a supporting frame adapted to rest in use on the seat of the motor vehicle seat. In particular, the abovementioned frame generally carries a pair of constraint devices for fastening the child safety seat to opposite sides of the seat. Each constraint device is adapted to a releasably and substantially snap coupling with an appropriate matching element integral with a respective side of the seat itself.

In order to avoid accidental detachments of the safety seat due to vehicle sudden acceleration or deceleration or to abnormal stress on the child safety seat itself, it is normally envisaged the additional use of appropriate locking or anti-release devices which selectively prevent the child safety seat constraint devices to disengage from the respective seat matching elements.

The safe use of the child safety seat equipped with the abovementioned anti-release devices is somewhat inconvenient as multiple distinct operations are required for each assembly or disassembly manoeuvre. In particular, for fastening the child safety seat to the seat, it is necessary to determine the approach of the constraint devices to the respective matching elements so as to cause a snap engagement between each other and, then, operate the anti-release device to lock the assembly thus constructed in a fastening configuration. Conversely, to disassemble the child safety seat from the seat, it is necessary to reverse the procedure, i.e. to initially deactivate the anti-release device and then actually decouple the constraint devices from the matching elements.

Furthermore, in a case in which the constraint devices are coupled with the respective matching members and the anti-release device is inadvertently not activated, the risk of the child safety seat accidental detachment during travel may arise with the evident consequences that this may entail.

It is the object of the present invention to provide a constraint device for the releasable fastening of a child safety seat to a motor vehicle seat, which simply and cost-effectively obviates the aforementioned drawbacks.

The abovementioned object is obtained by the present invention, which relates to a constraint device for the releasable fastening of a child safety seat to a motor vehicle seat, as defined in the appended claim 1.

For a better understanding of the present invention, it will now be described a preferred embodiment only by way of non-limitative example, and with reference to the accompanying drawings, in which:
Figures 1 and 2 are respectively a side view and a top view of a motor vehicle seat on which a child safety seat is fitted and fastened to the car seat itself by means of constraint devices according to the present invention;
Figures 3, 4 and 5 are side views, in partial section and magnified scale, of one of the constraint devices of Figure 1, in various operative conditions;
Figure 6 is a section taken along line VI-VI of Figure 3;
Figure 7 is a section taken along line VII-VII of Figure 3;
Figure 8 is a section taken along line VIII-VIII of Figure 4;
Figure 9 is a side view in magnified scale of a constraint device element of Figures 3, 4 and 5; and
Figure 10 is a side view in magnified scale of an additional constraint device element of Figures 3, 4 and 5.

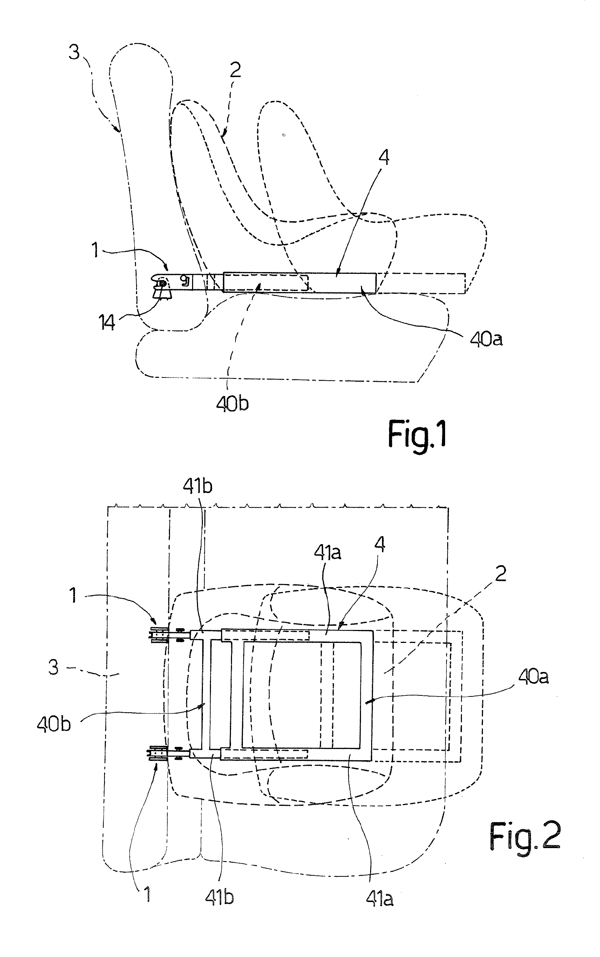

Figures 1 and 2 show a pair of constraint devices 1 made according to the present invention for fastening a child safety seat 2 to opposite sides of a seat 3 of a motor vehicle. In a known manner, the lower part of the seat of the child safety seat 2 is provided with a supporting frame 4, in use intended to be rested on the seat of the car seat 3. The frame 4 is of a telescopic type to allow adjusting the position of the child safety seat 2 on the seat 3 and is essentially formed by two slidingly reciprocally coupled structural elements 40a, 40b. One of such structural elements (40a) presents a rectangular frame conformation with opposite lateral tubular portions 41a, whose section is also tubular, extending parallel to the travel longitudinal direction of the motor vehicle, in the position of use on the seat 3. The other structural element (40b) has essentially an H-shaped conformation as seen in a top view and comprises opposite lateral portions 41b slidingly engaged, on one part, within the respective lateral tubular portions 41a of the structural element 40a and carrying, on the opposite part, respective constraint devices 1.

In particular, as it will be shown in detail below, the constraint devices 1 are adapted to releasably coupling, along a direction A parallel to the travel direction of the motor vehicle, respective matching pins 14 overhangingly protruding from respective opposite sides of the seat 3. More precisely, during the fastening step of the child safety seat 2, each constraint device 1 is housed in a blind groove created in the seat backrest 3 and engages the respective matching pin 14.

As shown in the Figures from 3 to 8, each constraint device 1 essentially comprises a supporting body 7; a fastening element 5 movably constrained to the body 7 to couple with the respective matching pin 14 carried by the seat 3; and a control element 6 also movably constrained to the body 7 and operatively connected to the fastening element 5 for defining the coupling and decoupling of the fastening element 5 itself and the matching pin 14.

In particular, the body 7, extending over the extension of a respective lateral portion 41b of the structural element 40b of the frame 4, presents, similarly as the lateral portion 41b itself, a tubular conformation of rectangular section and internally houses the fastening element 5 and the control element 6. In greater detail, the body 7 presents a pair of opposite lateral walls 12 between which is transversally extended a pin 17 for constraining both fastening and control elements 5, 6, and a pair of end walls 13 substantially orthogonal to the lateral walls 12 and connected with respective lateral edges thereof.

The lateral walls 12 define, at their free ends, respective C-shaped housings 15 for receiving the matching pin 14, whose concavity facing the opposite side of the lateral portions 41b of the structural element 40b.

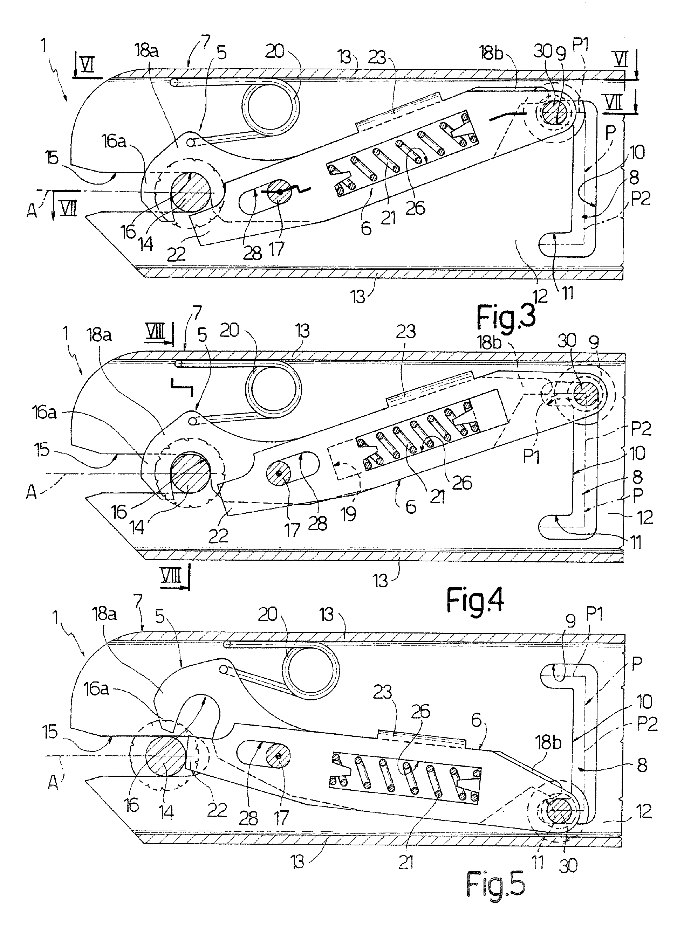

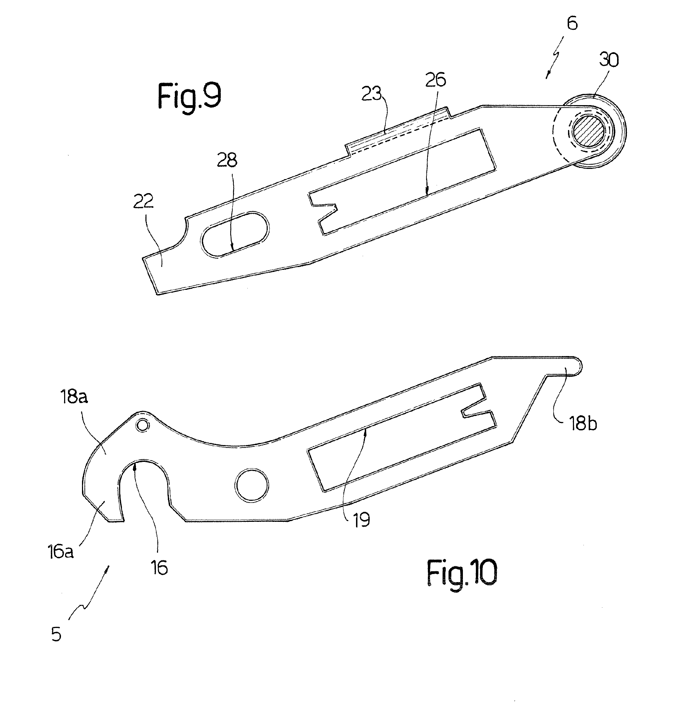

With reference to Figures 3-8 and 10, the fastening element 5 is comprised of an elongated plate arranged parallelly to the lateral walls 12 of the body 7 and hinged in intermediate position, by the pin 17, to the body 7 itself. The fastening element 5 presents a forked end 18a defining a C-shaped housing 16 for receiving the matching pin 14 and a tapered opposite end 18b. In particular, the housing 16 presents a concavity transversally facing the concavity of the housings 15 of the lateral walls 12 of the body 7 and is delimited towards the input/output section of the housings 15 themselves by a tooth 16a.

The fastening element 5 is loaded by a cylindrical helical spring 20 towards a fastening position (Figure 3), where is it adapted to house the matching pin 14 inside its own housing 16 and interferes with its own tooth 16a with the input/output section of the housings 15 so as to prevent disengagement of the locator pin 14 itself.

In particular, the spring 20 is constrained between the part of the forked end 18a of the fastening element 5 opposite to the input/output section of the housing 16 and the end wall 13 adjacent thereof.

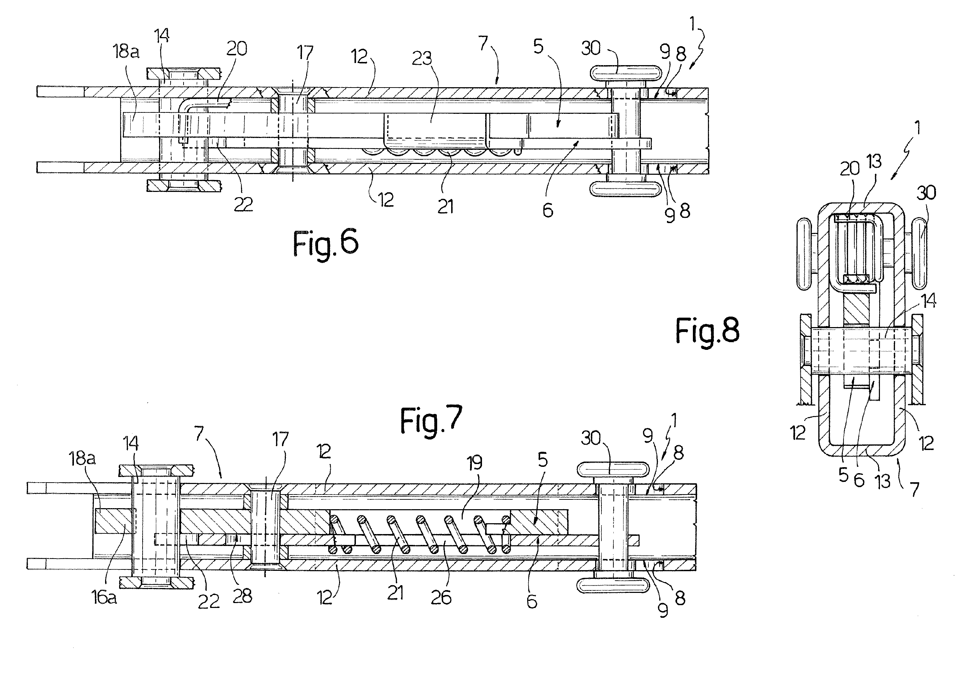

The fastening element 5 is pivotable by the control element 6 around the pin 17 to a release position (Figure 5) in which its own forked end 18a is presented as arranged outside the profile of the housings 15 of the lateral walls 12 of the body 7 so as to allow decoupling of the matching pin 14.

With reference to Figures 3-8 and 9, the control element 6 is comprised of an elongated plate arranged parallel to, and in contact with, body 7. The control element 6 overhangingly carries, at one end thereof facing the structural element 40a, an operating knob 30 protruding from opposite parts of the lateral walls 12 of the body 7, as it will be explained in greater detail below, and defines, at one opposite end thereof, a prismatic biaasing portion 22 adapted to cooperate with the matching pin 14 in fastening step of the child safety seat 2 to the seat 3.

Furthermore, the control element 6 presents a slot 28 elongated in the direction of maximum extension of the control element 6 itself and engaged by the pin 17. The slot 28 allows a longitudinal sliding of the control element 6 with respect to the fastening element 5 between two limit stop operational positions, respectively advanced (Figures 3 and 5) and retracted (Figure 4), in which the control element 6 itself can interact with the matching pin 14 or not.

Additionally, the control element 6 presents laterally, in intermediate position, a bent portion 23 extending orthogonally to the control element 6 itself and interacting with a lateral edge of the fastening element 5. With particular reference to Figures 3-5, the bent portion 23 allows the rotatingly feed of the fastening element 5 from the fastening position to the release position by an analogous operation of the control element 6 through the knob 30, and in the opposite manner, allows the feed of the control element 6 by the fastening element 5 during movement from the release position to the fastening position under the bias of the spring 20.

The fastening 5 and control 6 elements are equipped with respective prismatic housings 19, 26 for housing a cylindrical helical spring 21 adapted to load the control element 6 towards the advanced position.

Advantageously, shifting of the control element 6 is made along a predetermined path P of movement defined by the body 7 and comprising two sections P1 and P2 oriented in different directions and along which it is respectively inhibited and allowed the operation of the fastening element 5 by the control element 6 itself.

In particular, the path P is defined by a pair of C-shaped grooves 8 made on the respective lateral walls 12 of the body 7 and engaged by the operating knob 30.

In greater detail, each groove 8 comprises a main section 10 orthogonal to the direction A and a pair of end sections 9, 11 extending from the same part towards the respective housing 15 parallel to the direction A itself, and consequently transversally to the resultant of the weight forces weighing in use on the child safety seat 2. The section 9 of the grooves 8, arranged on the part of the spring 20 relative to the respective housing 15, defines the section P1 of the path P, while the sections 10 and 11 define the section P2 of the path P. In a decoupling stroke of the constraint device 1 from the respective matching pin 14, the section P2 of the path P results arranged downstream of the section P1.

Consequently, as shown in the Figures from 3 to 5, the movement of the knob 30 along the sections 9 and 11 of the grooves 8 of the body 7 determines a shift of the control element 6 limited between the two abutment advanced and retracted positions of the opposite end edges of the slot 28 of the control element 6 itself with the pin 17. Furthermore, a movement of the knob 30 along the section 10 of the grooves 8 of the body 7 is adapted to determine a rotation of both the fastening and control elements 5, 6 around the pin 17.

In use, the release of the constraint device 1 from the matching pin 14 is obtained by externally operating the knob 30 inside the grooves 8 from the position shown in Figure 3 to the position shown in Figure 5.

In particular, Figure 3 illustrates the constraint device 1 with reference to the fastening configuration of the child safety seat 2 to the car seat 3. In these conditions, the forked end 18a of the fastening element 5, loaded by the spring 20, is coupled with the matching pin 14, and the spring 21 maintains the control element 6 in the advanced operative position, the biasing portion 22 being arranged on one side of the abovementioned matching pin 14 and the knob 30 in abutment against the end edges of the sections 9 of the grooves 8 of the body 7. Furthermore, in the configuration shown, the housings 19 and 26 of the fastening element 5 and of the control element 6 result in overlapping. Additionally, the bent portion 23 of the control element 6 extends above the intermediate portion of the fastening element 5.

By moving the knob 30 inside the sections 9 of the grooves 8 towards the structural element 40a, the control element 6 is shifted with respect to the fastening element 5, without operating the latter, to reach its own retracted position. Consequently, the spring 21 is compressed and the biasing portion 22 of the control element 6 is distanced from the matching pin 14. In such conditions (Figure 4), the fastening element 5 keeps on being coupled with the matching pin 14 and the child safety seat 2 remains fastened to the car seat 3. In the case in which the external action ceases on the knob 30 in correspondence with the position shown in Figure 4, the spring 21 extends returning the constraint device 1 to the initial configuration of Figure 3.

By continuing instead the action on the knob 30 so as to guide it inside the sections 10 of the grooves 8, the control element 6 rotatingly feeds, by the bent portion 23, the fastening element 5 around the pin 17 towards the release position. In this condition, the spring 20 is compressed by the rotation of the forked end 18a of the fastening element 5.

In the case in which the external action comes less while the knob 30 is along the sections 10 of the grooves 8, the compressed spring 20 rotatingly pushes the fastening element 5 around the pin 17 to return it to the fastening position on the matching pin 14. The fastening element 5, by interacting with the bent portion 23 of the control element 6, rotatingly feeds the latter with itself around the pin 17 until reaching the configuration shown in Figure 4. With reference to the latter figure, the spring 21, without external action, stretches and returns the knob 30, the control element 6 and the fastening element 5 to the initial configuration of Figure 3.

In the case in which the action on the knob 30 continues in order to guide it along the sections 11 of the grooves 8 to the configuration shown in Figure 5, the control element 6 is shifted towards its own advanced position defining, through its own portion 22, a biasing action on the matching pin 14 to decouple it completely from the forked end 18a of the fastening element 5.

In this condition, returning the fastening and control element 5, 6 towards the initial configuration in Figure 3 is prevented by the abutment of the knob 30 against the lateral edges of the sections 11 in the grooves 8 which contrasts the push of the spring 20.

Therefore, the child safety seat 2 can be removed from the seat 3 of the motor vehicle.

The fastening of the child safety seat 2 to the seat 3 may occur beginning from the configuration shown in Figure 5 simply by approaching each constraint device 1 to the respective matching pin 14 so as to cause an engagement thereof in the housings 15 of the respective body 7.

During such action, the abovementioned matching pin 14 interacts with the biasing portion 22 of the respective control element 6 moving it to the retracted position against the action of the spring 21, and consequently shifting the knob 30 inside the sections 11 of the grooves 8 of the respective body 7.

At the inlet of the knob 30 with the sections 10 of the grooves 8, the spring 20 can extend causing the rotation of the fastening element 5 around the pin 17 towards the fastening portion. The abovementioned fastening element 5 rotatingly feeds, through the bent portion 23, the control element 6 around the pin 17; by a subsequent stretching of the spring 21, which can occur in correspondence with the sliding of the knob 30 along the sections 9 of the grooves 8, the control element 6 is moved towards the advanced position. At the end of such manoeuvre, the constraint device 1 reaches the fastening configuration on the respective matching pin 14 shown in Figure 3.

The advantages made possible by the present invention are apparent after analysis of the features of the constraint device 1 made according to the present invention.

In particular, the constraint device 1 does not require using distinct and additional anti-release devices selectively operable to prevent the accidental release of the child safety seat 2 from the seat 3 following abnormal stress or sudden braking of the motor vehicle. In fact, the release of the child safety seat 2 from the seat 3 may exclusively occur upon an external action prolonged in time which guides the knob 30 of each constraint device 1 along the dotted line path P defined by the grooves 8 of each supporting body 7. A sudden stress of limited duration, incapable of shifting the knob 30 along the entire path P, cannot in any way determine the release of the child safety seat 2 from the seat 3.

Furthermore, using the child safety seat 2 equipped with the constraint devices 1 is also easy in the presence of frequent assembly and disassembly operations of the abovementioned child safety seat 2 on/off the seat 3 because one only manoeuvre is required by the user. In particular, fastening of the child safety seat 2 to the seat 3 requires only an initial biasing of the constraint devices 1 against the respective matching pins 14, and it occurs practically automatically by effect of the springs 20 and 21 action.

Finally, the assembly of the child safety seat 2 to the seat 3 determines in each case a safety fastening between the constraint devices 1 and the matching pins 14, thereby avoiding a possible activation of the fastening function without activating the anti-release function, as may occur instead in the known systems using distinct devices for the two functions.

It is clear that changes and variations can be implemented to the described and illustrated constraint device 1 without departing from the scope of the claims.

In particular, the path P may be defined by raised positions of the side walls 12 of the supporting body 7 instead of the grooves 8.

## Claims

1. A constraint device (1) for the releasable fastening of a child safety seat (2) to a motor vehicle seat (3), **characterised in that** it comprises:
- fastening means (5) for coupling with matching means (14) carried by the seat (3);
- control means (6) operatively connected to said fastening means (5) and mobile for defining coupling and decoupling of said fastening means (5) to said matching means (14); and
- guiding means (7) for defining a predetermined movement path (P) of said control means (6); said path (P) comprising a first section (P1), along which the operation of said fastening means (5) is prevented, and a second section (P2), along which the operation of said fastening means (5) by said control means (6) is allowed.

2. A device according to claim 1, **characterised in that** said first and second sections (P1, P2) of said path (P) are oriented in distinct directions.

3. A device according to claim 1 or 2, **characterised in that** said first section (P1) of said path (P) extends transversally to the resultant of the weight forces weighing in use on said child safety seat (2).

4. A device according to claim 3, **characterised in that** said second section (P2) of said path (P) extends at least in part transversally with respect to said first section (P1).

5. A device according to any of the previous claims, **characterised in that** said second section (P2) of said path (P) is arranged downstream of said first section (P1) along a decoupling stroke of said fastening means (5) from said matching means (6).

6. A device according to any of the previous claims, **characterised in that** it comprises a supporting body (7) movably carrying said fastening (5) and control (6) means, said guiding means comprising a first engagement element (8) defined by said supporting body (7), shaped according to said path (P) and slidingly coupled with a second engagement element (30) integral with said control means (6).

7. A device according to claim 6, **characterised in that** said first and second engagement elements comprise respectively a groove (8) in said supporting body (7) and a knob (30).

8. A device according to claim 6 or 7, **characterised in that** said fastening means comprise a fastening element (5) defining a housing (16) for receiving said matching means (14) and mobile between a fastening position and a release position, in which it is engaged or disengaged from said matching means (14) respectively, and **in that** said control means comprise a control element (6) sliding with respect to said fastening element (5) responsive to the movements of said second matching element (30) parallel to said first section (P1) of said path (P), and integrally mobile with respect to said fastening element (5) responding to movements of said second engagement element (30) transversal to said first section (P1).

9. A device according to claim 8, **characterised in that** said fastening element (5) is fastened to said supporting body (7) pivotally around a respective pin (17), and **in that** said control element (6) presents a slot (28) engaged by said pin (17) to allow sliding with respect to said fastening element (5).

10. A device according to claim 8 or 9, **characterised in that** it comprises first elastic means (20) exerting on said fastening element (5) a biasing action towards said fastening position, and second elastic means (21) interposed between said fastening and control elements (5, 6) for exerting an biasing action on said control element (6) towards said matching means (14).
